# EUROPÄISCHE PATENTSCHRIFT

(11) **EP 0 484 282 B1**
(45) Veröffentlichungstag und Bekanntmachung des Hinweises auf die Patenterteilung: **10.04.1996**
(21) Anmeldenummer: 91810847.3
(22) Anmeldetag: 01.11.1991
(51) Int. Cl.: G01N 21/17

(54) **Verfahren und Anordnung zur Thermowellenanalyse**
Method and apparatus for thermal wave analysis
Procédé et appareil d'analyse par moyen des ondes thermiques

(30) Priorität: 02.11.1990 DE 4035266
(43) Veröffentlichungstag der Anmeldung: 06.05.1992
(73) Patentinhaber: JENOPTIK GmbH, D-07743 Jena (DE)
(72) Erfinder: Kowalski, Peter, O-6902 Jena (DE); Wagner, Matthias, Dr., O-6908 Jena (DE); Geiler, Hans-Dieter, Dr., O-6900 Jena (DE)
(74) Vertreter: Tschudi, Lorenz

(56) Entgegenhaltungen:
- EP-A- 0 233 120
- EP-A- 0 312 765
- US-A- 4 579 463
- APPLIED PHYSICS LETTERS. Bd. 50, Nr. 19, Mai 1987, NEW YORK US Seiten 1349 - 1351; L. CHEN ET AL: 'New technique of photodisplacement imaging using one laser for both excitation and detection'
- APPLIED SURFACE SCIENCE. Bd. 50, Nr. 1-4, Juni 1991, AMSTERDAM NL Seiten 373 - 376; M. WAGNER ET AL: 'Single-beam thermowave analysis of semiconductors'
- MEASUREMENT SCIENCE & TECHNOLOGY. Bd. 2, Nr. 11, November 1991, LONDON GB Seiten 1088 - 1093; M. WAGNER ET AL: 'Single-beam thermowave analysis of ion implanted and laser annealed semiconductors'

## Beschreibung

Die Erfindung betrifft ein Verfahren zur Thermowellenanalyse gemäss dem Oberbegriff des Anspruches 1 und eine Anordnung zur Thermowellenanalyse.

Sie findet Anwendung zur Messung geometrischer, thermischer, elektronischer und elastomechanischer Materialparameter von Oberflächenschichten durch Auswertung der photothermischen Response-Signale aus den Oberflächenschichten. Das berührungslos und zerstörungsfrei anwendbare Verfahren gemäß der Erfindung hat ihr Hauptanwendungsgebiet in der Beschichtungstechnologie als Prüfverfahren zur Qualitätskontrolle.

Zur berührungslosen und zerstörungsfreien Erfassung von Parametern dünner Schichten sind Methoden der photothermischen Spektroskopie bekannt. Die physikalischen Prinzipien und grundsätzlichen Lösungen sind z. B. in "Photoacoustic and Thermal Wave Phenomena in Semiconductors", Ed. A. Mandelis, North-Holland, New York 1987, zusammengestellt und beschrieben.

Ein bekanntes Verfahren nach A. Rosencwaig besteht darin, daß ein periodisch intensitätsmodulierter Pumplaser eine Thermowelle in der Schicht anregt, die ihrerseits den Brechungsindex lokal moduliert, so daß mit einem zweiten sogenannten Testlaserstrahl die modulierte optische Reflexion (MOR) vermessen werden kann (US 4 579 463). Die Signalverarbeitung erfolgt dabei vorzugsweise mittels Lock-in-Technik, um Phase und Amplitude der MOR zu erfassen. Dieses Verfahren erfordert den Einsatz von 2 Lasern unterschiedlicher Wellenlänge sowie zur Gewährleistung eines quantitativ auswertbaren Reflexionssignals die konzentrische Anordnung von Pump- und Teststrahl bei senkrechtem Einfall auf die Schicht. Der Teststrahlradius sollte dabei höchstens die Hälfte des Pumpstrahlradius betragen.

Die in den Patentschriften US 4 634 290, US 4 636 088, EP 0 162 681, EP 0 291 276 vorgeschlagenen Lösungen haben neben der hohen optischen Präzision der definierten Fokuslage einen optischen Mehraufwand (Teleskope) zur Anpassung der erzeugten Taillen der Laserstrahlbündel und einen Justieraufwand zum konzentrischen Plazieren der Taillen auf der Schichtoberfläche. Außerdem stellt das Eigenrauschen des Testlasers einen begrenzenden Faktor des Auflösungsvermögens dar, so daß bei üblichen Forderungen von δR/R<10⁻⁶ hoch rauschstabilisierte Laser verwendet werden müssen. Das wirkt zusätzlich kostenerhöhend. Bei Einsatz des Zweistrahlverfahrens als in-situ-Meßverfahren mit großem Objektiv-Objekt-Abstand z B. in Beschichtungskammern sind die optische Justage und die Stabilität kaum noch beherrschbar. Zur Messung der MOR sind auch Einstrahlverfahren bekannt (L. Chen et al. in: Appl. Phys. Lett 50 (1987) 1349; A. Lörincz, L. Andor in: Photoacoustic and Photothermal Phenomena, P. Hes. J. Pelzl [Hrsg.] Springer Verlag Heidelberg, 1988, Seite 486). Diese sind dadurch gekennzeichnet, daß die reflektierte Pumplaserstrahlung detektiert wird. Zur Trennung der MOR von der reflektierten modulierten Pumpintensität nutzt man die Tatsache , daß bei der Modulation durch die Thermowelle Oberwellen der Modulationsfrequenz entstehen. Damit ist eine Lock-in-Detektion der 2. harmonischen Oberwelle möglich. Der Nachteil dieses Verfahrens liegt darin, daß auch der Modulator des Pumplasers Oberwellen erzeugt, welche das Meßsignal verfälschen. Das von A. Lörincz (Appl. Phys. B47 (1988) 40) vorgeschlagene Verfahren der exakten Rechteckmodulation des Pumplasers bedeutet für höhere Modulationsfrequenzen im MHz-Bereich einen extrem hohen Aufwand zur Modulation (Anstiegszeiten im ps-Bereich). In der zitierten Arbeit wird gleichzeitig der Gedanke geäußert, durch ein Phasenkontrastverfahren aus der von der Thermowelle erzeugten 1. Beugungsordnung des reflektierten Laserstrahls die darin enthaltene MOR-Information von der modulierten Pumpintensität zu trennen. Wegen der endlichen Breite der Beugungszone ist die Reduktion des MOR-Pumpoberwellen-Verhältnisses auf 10⁻⁷ kaum möglich. Das gleiche trifft für die Rauschkompensation zu.

Der Gegenstand der EP-O 233 120 betrifft ein Verfahren und eine Vorrichtung zur Analyse und zur Messung der physikalischen Parameter eines in Schichten angeordneten Materials; Parameter wie das Absorptionsvermögen B, der Diffusionskoeffizienten A der Oberflächenschicht und der Wärmewiderstand R des Zwischenraumes zwischen den beiden Schichten durch Radiometrie. Die Probe wird mit Hilfe eines thermischen Energieflusses angeregt, der amplitudenmoduliert ist. Die Anregung erfolgt zunächst bei einer hohen Frequenz Fh und danach bei einer tiefen Frequenz Fb. Die Parameter sind aufgrund der Messungen der Phase und der Amplitude der beiden thermischen Signale berechnet. Das Verfahren und die Vorrichtung finden bei der zerstörungsfreien Kontrolle von industriellen Produkten Anwendung.

Der Erfindung liegt die Aufgabe zugrunde, den technischen Aufwand zur Durchführung der optischen Thermowellenanalyse zu reduzieren und die Empfindlichkeitsgrenze zu senken. Die Aufgabe wird erfindungsgemäß mit einem Verfahren zur Thermowellenanalyse gemäß den Merkmalen in Anspruch 1 gelöst.

Die Grundidee der Erfindung basiert darauf, daß die Objektanregung und die Detektierung der durch das Objekt modulierten Transmission oder Reflexion mit einem einzigen auf das Objekt gerichteten optischen Strahl erfolgt, dessen Intensität mit zwei Frequenzen moduliert ist. Diese Modulation läßt sich erzeugen durch eine modulierbare Lichtquelle, der beide Modulationsfrequenzen aufgeprägt werden, durch die Aufteilung eines Strahles in zwei Teilstrahlen, ihre getrennte Modulation und nachfolgende Zusammenführung zu einem Strahl oder durch die Verwendung zweier getrennter, einzeln modulierter Lichtquellen und einer Vereinigung der so geschaffenen Teilstrahlen. Für den Fall der Herstellung des Strahles aus zwei von einer Lichtquelle aufgespaltenen Teilstrahlen muß jedoch die Möglichkeit der Interferenz der Teilstrahlen miteinander ausgeschlossen werden, um eine unerwünschte Erzeugung von Mischprodukten beider Frequenzen zu unterdrücken.

Die durch die erfindungsgemäße additive Zweifrequenzmodulation, die für das Objekt effektiv als Anregung mit dem arithmetischen Mittel der beiden Frequenzen wirkt, ausgelöste Thermowellen-Reaktion findet sich in das Objekt wieder verlasssenden Strahlanteil in Form von Mischprodukten der beiden Frequenzen, die im Anregungsstrahl auf Grund der Additivität der Modulation nicht enthalten sind und deshalb über eine frequenzselektive Einrichtung nachgewiesen werden können.

Zweckmäßigerweise verwendet man zur Detektierung der von Objekt modulierten Transmission oder Reflexion die Differenzfrequenz der beiden den Strahl modulierenden Frequenzen, da sie leicht in niederfrequente Bereiche gelegt werden kann, was sich vorteilhaft auf den meßelektronischen Aufwand auswirkt. Für die ebenfalls mögliche Auswertung der Summenfrequenz aus den beiden Modulationsfrequenzen ist außer der Bewertung der Intensitätsamplitude auch eine Analyse der Phasenablage erforderlich.

Außerdem ist es vorteilhaft, die Detektion der modulierten Transmission bzw. Reflexion durch eine Differenzbildung aus Meßsignalen der Intensität des das Objekt wieder verlassenden Strahlanteils und der Intensität eines aus dem einfallenden Strahl ausgekoppelten Teilstrahls vorzunehmen.

Die zur Differenzbildung verwendeten Intensitäten werden beim Meßprozeß zweckmäßig durch ein Element steuerbarer Transmission so abgeglichen, daß der zeitliche Mittelwert der Differenz der Meßsignale identisch Null ist. Dieses Meßprinzip hat den Vorteil, daß derjenige Anteil des Intensitätsrauschens der Lichtquelle unterdrückt wird, der das Schrotrauschen des Photonenstromes der Detektoren übersteigt und von dem bei einer alleinigen Intensitätsmessung des vom Objekt beeinflußten Strahlanteils insbesondere jene Beiträge störend wirken, die aus den Bereichen der detektierten Mischfrequenzen sowie der um die Mischfrequenz verschobenen Modulationsfrequenzen herrühren. Damit wird die Grenzempfindlichkeit nicht mehr von den spezifischen Rauscheigenschaften der Lichtquelle, sondern nur noch von der Intensität der Lichtquelle und den Rauscheigenschaften des Detektionssystems bestimmt. Somit sind auch vergleichsweise stark rauschende Lichtquellen, z. B. Laser geringer Stabilität, für das Meßverfahren einsetzbar.

Der Einsatzbereich des erfindungsgemäßen Verfahrens läßt sich auch auf solche Thermowellen-Reaktionen des Objektes erweitern, die im wesentlichen keine Modulation des Transmissions- bzw. Reflexionsvermögens bewirken, sondern zur Lage- und Formmodulationen des Strahles führen. Das geschieht, indem an geeigneter Stelle, im Verlauf des vom Objekt beeinflußten Strahles Blenden eingefügt werden, die den Strahl lage- und/oder formabhängig beschneiden. Darüber hinaus können Blenden in diesem Strahlverlauf in einer konjugierten Objektebene zur Meßfeldbegrenzung Anwendung finden.

Die Umsetzung des Verfahrens gemäß der Erfindung in Anordnungen, die die versprochenen vorteilhaften Wirkungen voll zum Tragen bringen, kann im wesentlichen nach der Art und Weise der technischen Realisierung der additiven Zweifrequenzmodulation unterschieden werden.

Diese erfolgt erfindungsgemäß durch die kennzeichnenden Merkmale des Anspruches 14. Dabei ist die Erzeugung eines einzigen auf das Objekt gerichteten Lichtstrahls generell danach unterteilt, ob das Licht einer Quelle oder zweier voneinander unabhängiger Quellen (Anspruch 23) verwendet wird. Der erste Fall läßt sich dann noch danach unterscheiden, ob die Zweifrequenzmodulation innerhalb der Lichtquelle erfolgt (Anspruch 14) oder eine Strahlteilung und separate Modulation der Teilstrahlen realisiert wird (Anspruch 22).

Die erfindungsgemässe Anordnung gemäß Anspruch 14 läßt sich vorteilhaft dadurch realisieren, daß als Lichtquelle eine Laserdiode eingesetzt wird, der beide Modulationsfrequenzen zugeführt werden. In Abhängigkeit davon, ob das Objekt in Transmission oder in Reflexion analysiert werden soll, wird entweder dem Objekt ein dem Objektiv gleichwertiges optisches System und der Meßdetektor nachgeordnet oder ein strahlauskoppelndes Element für den reflektierten Strahlanteil nach dem doppelt genutzten Objektiv im Strahlengang angeordnet. Als vorteilhaft zur Unterdrückung des Laserrauschens erweist sich, daß im elektronischen Auswertetrakt vor der frequenzselektiven Einrichtung ein Differenzverstärker angeordnet ist, der an seinem invertierenden Eingang mit einem Referenzdetektor, dessen Eingangssignal aus dem unbeeinflußten Strahl der Laserquelle mittels eines halbdurchlässigen Spiegels ausgekoppelt ist, beschaltet ist. Weiterhin läßt sich die Laserquelle zweckmäßig aus einem unmodulierten Laser und einem modulierenden optischen Element zusammensetzen, dem die zwei Modulationsfrequenzen zugeführt werden. Das modulierende optische Element ist dabei vorteilhaft ein akustooptischer Modulator.

Die Anordnung gemäß Anspruch 22 läßt sich vorteilhaft gestalten, indem beide Teilstrahlen eingangs gleichsinnig linear polarisiert sind, in den Teilstrahlengängen jeweils eine unter dem Brewsterwinkel positionierte Glasplatte so angeordnet ist, daß der jeweils reflektierte Strahlanteil der Glasplatten entlang einer gemeinsamen Achse verläuft, wobei auf dieser Achse zwischen den Glasplatten ein λ/2-Plättchen und im Richtungssinn der reflektierten Strahlanteile ein Referenzdetektor außerhalb des Glasplattenabstandes angeordnet sind, und ein λ/2-Plättchen in einem der Teilstrahlengänge zwischen Glasplatte und Strahlteilerwürfel vorhanden ist.

Dieser Aufbau läßt sich in zwei Varianten vorteilhaft erweitern. Zum einen wird der Meßdetektor auf der besagten gemeinsamen Achse der Glasplatten dem Referenzdetektor gegenüberliegend angeordnet und der Strahlteilerwürfel in Form einer Polarisationsweiche ausgelegt. Zum anderen kann man eine vollständige Entkopplung von einfallendem und am Objekt reflektiertem Strahl erreichen, indem der einfallende Laserstrahl zum Objektiv achsparallel orientiert ist, so daß auch der reflektierte Strahl zentralsymmetrisch achsparallel bezüglich der Objektivachse verläuft, und sich im Strahlengang des reflektierten Strahls der Meßdetektor befindet. Für beide Varianten ist es vorteilhaft, unmittelbar vor dem Referenzdetektor ein Element mit steuerbarer Transmission zum Abgleich des zeitlichen Mittelwertes aus Meß- und Referenzdetektorsignal auf Null anzuordnen.

Die Anordnung gemäß Anspruch 27 wird dadurch vorteilhafte ergänzt, daß zwischen Strahlteilerwürfel und Objektiv ein halbdurchlässiger Spiegel angeordnet ist, der (analog zur ersten erfindungsgemäßen Anordnung) einen Strahlanteil des einfallenden Laserstrahles auf einen Referenzdetektor auskoppelt, wobei Meßdetektor- und Referenzdetektorsignal den Eingängen eines der frequenzselektiven Einrichtung vorgeschalteten Differenzverstärkers zugeführt werden. Des weiteren ist es von Vorteil, wenn die Strahlen der zwei Laserquellen senkrecht zueinander polarisiert sind, der Strahlteilerwürfel gleichzeitig eine Polarisationsweiche ist und vor dem Meß- und dem Referenzdetektor jeweils ein Polarisationsfilter mit der gleichen Orientierung steht, um Teile des Laserstrahls für die Registrierung auszusondern, die eine Ermittlung der Phasenablage zwischen anregendem Modulationssignal und dem Response-Signal gestatten.

Mit dem erfindungsgemäßen Verfahren und der erfindungsgemäßen Anordnung ist es möglich, den technischen Aufwand zur Thermowellenanalyse erheblich zu reduzieren und mit Hilfe geringfügiger Ergänzungen (Referenzzweig) die Empfindlichkeitsgrenze entscheidend zu senken.

Die Erfindung soll nachstehend anhand von Ausführungsbeispielen näher erläutert werden. Die Zeichnungen zeigen:
- Fig. 1: den erfirdungsgemäßen Grundaufbau einer Anordnung zur Thermowellenanalyse in der Transmissionsvariante
- Fig. 2: eine erfindungsgemäße Anordnung mit aufgespaltenem Laserstrahl in der Reflexionsvariante mit spezieller Detektor-Balance-Einrichtung
- Fig. 3: eine spezielle Ausführungsform der Anordnung mit aufgespaltenem Laserstrahl zur vollständigen Entkopplung des reflektierten Strahlanteils
- Fig. 4: eine Transmissionsanordnung mit zwei separaten Laserquellen und Polarisationsentkopplung von Meß- und Referenzzweig

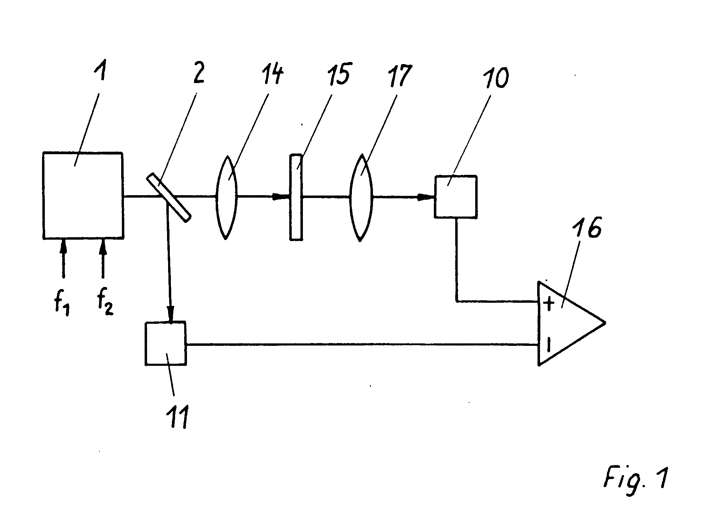

In Fig. 1 ist das erfindungsgemäße Verfahren in einer Grundvariante dargestellt. Dabei wird ein einziger optischer Strahl über ein Objektiv 14 auf das zu untersuchende Objekt 15 fokussiert, wobei der optische Strahl vor allem aus Gründen der erforderlichen Leistung im folgenden ein Laserstrahl sein soll. Der Laserstrahl weist erfindungsgemäß ein Intensitätsmodulationsspektrum mit zwei diskreten Frequenzen f₁ und f₂ auf. Als Quelle wird dazu zweckmäßig eine Laserdiode 1′ eingesetzt, der beide Frequenzen f₁ und f₂ zugeführt werden. Das Objekt 15 erfährt dadurch eine effektive Anregung mit dem arithmetischen Mittel der Frequenzen f₁ und f₂ und zeigt eine Thermowellenreaktion, die im das Objekt verlassenden Strahlanteil Mischprodukte der Frequenzen f₁ und f₂ enthält, die auf Grund der Additivität der Anregung im einfallenden Laserstrahl nicht enthalten sind. Die Thermowellenreaktion des Objekts 15 wird gemäß Fig. 1 in Transmission über ein dem Objektiv 14 gleichwertiges optisches System 17 auf einen Meßdetektor 10 übertragen, dessen Signal - bei Voraussetzung einer extrem rauscharmen Laserquelle 1 - zur Erzeugung der Amplitude der Mischfrequenz mittels einer frequenzselektiven Einrichtung zur Auswertung ausreicht, ohne daß die Elemente halbdurchlässiger Spiegel 2, Referenzdetektor 11 und Differenzverstärker 16 unbedingt erforderlich sind. Mit diesem in Fig. 1 angegebenen Referenzzweig, der einen Anteil aus dem auf das Objekt 15 gerichteten Laserstrahl auskoppelt, kann jedoch wirkungsvoll das Laserrauschen unterdrückt werden, wenn die eingehenden Meß- und Referenzsignale auf den zeitlichen Differenz-Mittelwert Null abgeglichen werden. Das zur Auswertung in der frequenzselektiven Einrichtung gelangende Differenzverstärkersignal kann also außerdem zum in Fig. 1 nicht dargestellten Abgleich der Intensitäten von Meß- und Referenzsignal verwendet werden.

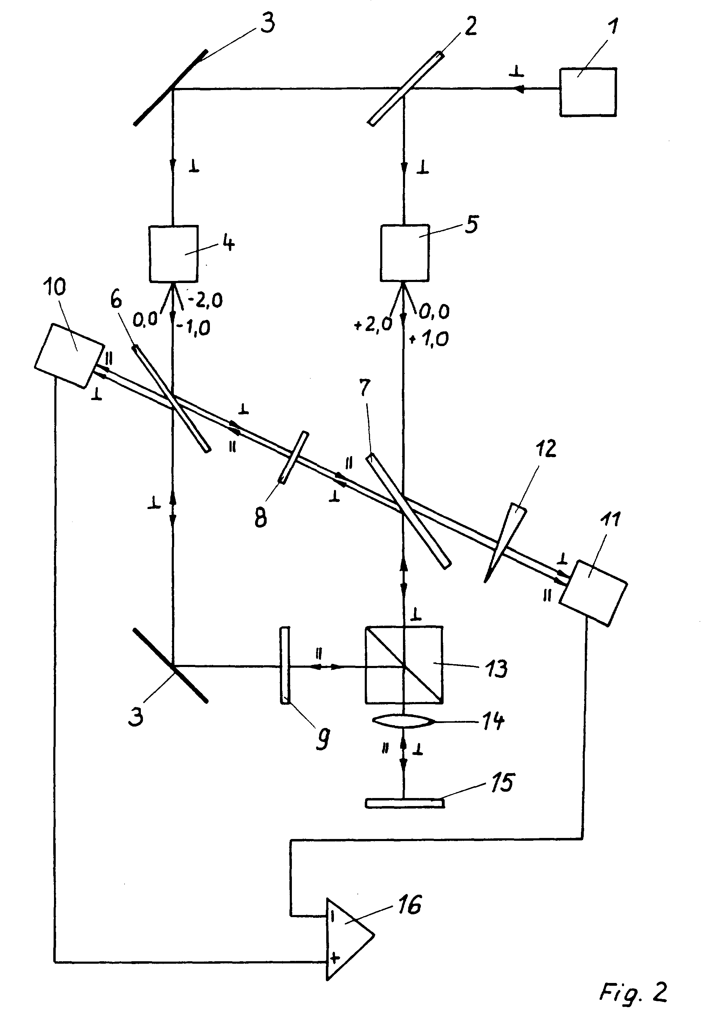

In Fig. 2 ist die Strahlführung für eine Reflexionsarbeitsweise bei Verwendung eines cw-Lasers als Laserquelle 1 und zweier akustooptischer Modulatoren 4 und 5 in zwei durch Strahlaufspaltung entstandenen Teilstrahlen zur Intensitätsmodulation dargestellt.

Der senkrecht zur Zeichenebene polarisierte Laserstrahl wird durch den Einsatz eines halbdurchlässigen Spiegels 2 und eines Umlenkspiegels 3 in zwei intensitätsgleiche Anteile aufgespalten, und die so entstandenen Teilstrahlen durchlaufen die Modulatoren 4 und 5. Nach ihrer Modulation treffen die Teilstrahlen auf jeweils eine Glasplatte 6 bzw. 7. Die Glasplatten 6 und 7 sind jeweils unter dem Brewsterwinkel orientiert und so angeordnet, daß die reflektierten Strahlanteile der Glasplatten 6 und 7 entlang einer gemeinsamen Achse verlaufen, auf der zwischen den Glasplatten 6 und 7 ein λ/2-Plättchen 8 angeordnet ist, so daß der reflektierte Strahlanteil der Glasplatte 6 nach Polarisationsdrehung um 90° die Glasplatte 7 passiert und mit dem von Glasplatte 7 reflektierten Strahlanteil auf den ebenfalls auf der besagten gemeinsamen Achse befindlichen Referenzdetektor 11 fällt. Der durch die Glasplatte 6 hindurchtretende Strahlanteil wird durch einen weiteren Spiegel 3 umgelenkt, passiert ein λ/2-Plättchen 9 und wird zusammen mit dem durch die Glasplatte 7 hindurchgetretenen Strahlanteil des zweiten Teilstrahls über einen als Polarisationsweiche ausgelegten Strahlteilerwürfel 13 als ein Strahl mittels des Objektivs 14 auf das Objekt 15 fokussiert. Der vom Objekt 15 reflektierte Strahl wird entsprechend den beiden enthaltenen Polarisationsrichtungen im Strahlteilerwürfel 13 erneut aufgespalten. Die so erzeugten Strahlanteile durchlaufen entgegengesetzt die zuvor von den zwei Teilstrahlen durchlaufenen Wege bis zu der jeweiligen Glasplatte 6 bzw. 7. Der an Glasplatte 7 reflektierte Anteil passiert das λ/2-Plättchen 8 und die Glasplatte 6 und wird zusammen mit dem an Glasplatte 6 reflektierten Anteil entlang der o. g. gemeinsamen Achse der Glasplatten 6 und 7 auf den Meßdetektor 10 geführt. Meß- und Referenzsignal werden wiederum in einem Differenzverstärker 16 voneinander subtrahiert. Über den Differenzverstärker 16 wird auch das Regelsignal für den bereits angedeuteten Intensitätsabgleich zwischen Meß- und Referenzdetektor 10 und 11 gewonnen, mit dem das Element mit steuerbarer Transmission 12 die Intensität auf optischem Wege auf den zeitlichen Mittelwert Null einstellt. Bei der Variante gemäß Fig. 2 ist es jedoch nicht möglich, die Rückwirkung der am Objekt 15 reflektierten Strahlanteile auf die Laserquelle 1 auszuschließen.

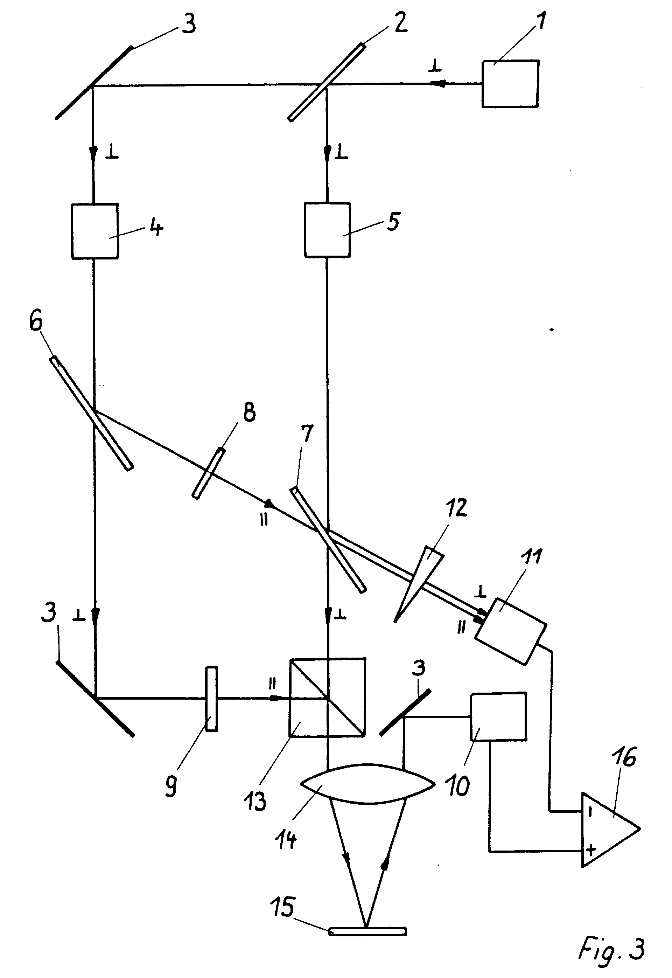

Fig. 3 modifiziert deshalb diese Variante, indem nach der identischen Herstellung der zwei Teilstrahlen und deren Vereinigung im Strahlteilerwürfel 13 das Objektiv 14 mit seiner Objektivachse aus der Anregungsstrahlrichtung herausgerückt wird, so daß Anregungs- und Reaktionsstrahl des Objekts 15 zentralsymmetrisch bezüglich der Objektivachse verlaufen und der am Objekt 15 reflektierte Reaktionsstrahl ober einen Spiegel 3 in den Meßdetektor 10 eintritt. Alle übrigen Elemente und deren Funktionen bleiben, wie für Fig. 2 beschrieben, erhalten.

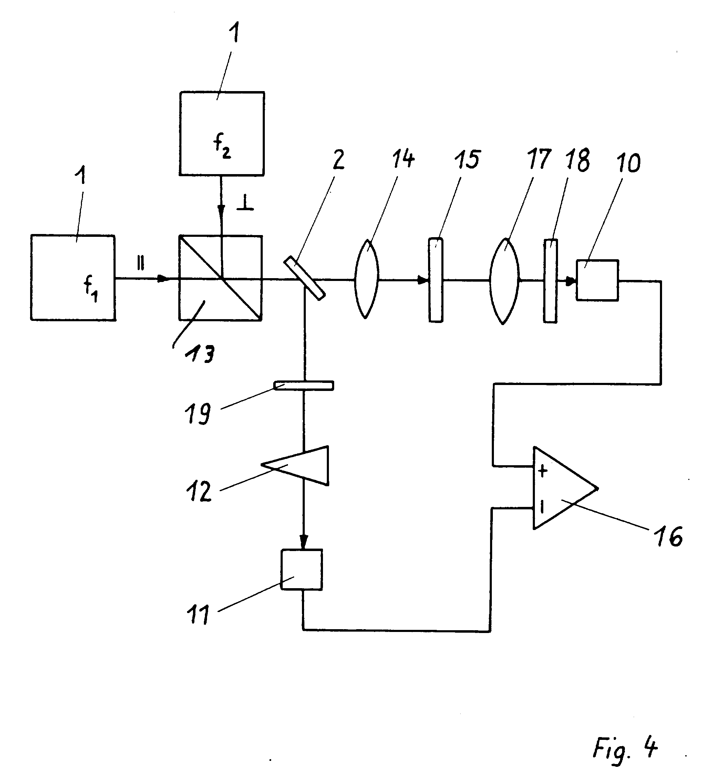

Für die Fig. 2 und Fig. 3, in denen zwei Teilstrahlen durch Aufspaltung des Lichts einer Laserquelle 1 erzeugt werden, ist noch darauf hinzuweisen, daß die Interferenzfähigkeit der Teilstrahlen unterbunden werden muß, um nicht durch Interferenzen Mischprodukte der Modulationsfrequenzen f₁ und f₂ zu erzeugen, die das Meßergebnis verfälschen. Dazu gibt es im wesentlichen vier Möglichkeiten, die wahlweise in den Teilstrahlgängen zur Anwendung kommen. In Fig. 2 sind zwei der Möglichkeiten angedeutet. Das sind zum einen die Erzeugung einer hinreichend großen Weglängendifferenz in den Teilstrahlengängen und zum anderen die Ausnutzung von verschiedenen Beugungsordnungen der akustooptischen Modulatoren 4 und 5. Bei letzterer Variante müssen sich die in den zwei Teilstrahlen verwendeten Beugungsordnungen um mindestens den Wert Eins unterscheiden. Weiterhin läßt sich die Interferenzfähigkeit der Teilstrahlen durch die Verwendung unterschiedlicher Trägerfrequenzen der akustooptischen Modulatoren 4 und 5 eliminieren, wodurch sich die Wellenlängen der Teilstrahlen geringfügig verändern lassen. Die vierte und letzte Möglichkeit ist in den Fig. 2 und Fig. 3 enthalten und betrifft die Polarisationsrichtung der Teilstrahlen senkrecht zueinander, wobei hier die senkrecht aufeinander stehenden Polarisationsrichtungen eine Doppelfunktion zur Referenz- und Meßwertauskopplung aufweisen. In Fig. 4, die die Transmissionsarbeitsweise mit zwei separaten Laserquellen 1 aufzeigt, sind zusätzliche polarisationsoptische Elemente eingesetzt, um Teile des Laserstrahles für die Registrierung auszusondern, die die Phasenablage des Responsesignals bezüglich des Modulationssignals des Anregungsstrahles ermitteln lassen. Nach seiner Modulation, die in diesem Beispiel nach Fig. 4 durch die Modulation zweier senkrecht zueinander polarisierter Halbleiterlaser realisiert werden soll, gelangt der mittels eines als Polarisationsweiche fungierenden Strahlteilerwürfels 13 zusammengefügte Strahl über das fokussierende Objektiv 14 zum Objekt 15. Aus diesem einfallenden Strahl wird mittels des halbdurchlässigen Spiegels 2 und eines Polarisationsfilters 19 ein Teil genau eines der beiden Teilstrahlen über das Element mit steuerbarer Transmission 12 auf den Referenzdetektor 11 zur Gewinnung des Referenzsignales geführt. Der durch das Objekt 15 transmittierte Teil des Laserstrahles gelangt über das dem Objektiv 14 gleichwertige optische System 17 und ein weiteres Polarisationsfilter 18, das genauso wie das Polarisationsfilter 19 orientiert ist, auf den Meßdetektor 10. Die weitere Verarbeitung erfolgt wie in den vorigen drei Beispielen beschrieben und läßt eine Phasenanalyse in Ergänzung zur Amplitudenanalyse zu.

## Patentansprüche

1. Verfahren zur Thermowellenanalyse, bei dem auf ein zu untersuchendes Objekt (15) ein Laserstrahl gerichtet wird, dessen durch die Objektreaktion auf die Energiedeponierung des Objekts (15) modulierte Intensität über ein zur Fokussierung verwendetes Objektiv (14) mit einem Meßdetektor (10) nachgewiesen wird, dadurch gekennzeichnet, daß
- die Intensität des Laserstrahls vor dessen Auftreffen auf dem Objekt (15) derart moduliert wird, daß ihr Modulationsspektrum zwei diskrete Frequenzen (f₁;f₂) enthält und
- die optische Response des Objektes (15) als Amplitude einer durch die besagte Objektreaktion erzeugten Mischfrequenz aus beiden Modulationsfrequenzen (f₁;f₂) am Ausgang des Meßdetektors (10) mittels einer frequenzselektiven Einrichtung gemessen wird.

2. Verfahren nach Anspruch 1, dadurch gekennzeichnet,
daß der Laserstrahl durch eine Laserdiode (1') generiert wird, der beide Modulationsfrequenzen (f₁;f₂) zugeführt werden.

3. Verfahren nach Anspruch 1, dadurch gekennzeichnet,
daß der Laserstrahl im Strahlengang zwischen Laserquelle (1) und Objektiv (14) einen optischen Modulator passiert, dem beide Modulationsfrequenzen (f₁;f₂) zugeführt werden.

4. Verfahren nach Anspruch 1, dadurch gekennzeichnet,
daß der Laserstrahl aus zwei nicht miteinander interferenzfähigen Teilstrahlen zusammengefügt wird, von denen jeder mit einer der beiden Frequenzen (f₁;f₂) intensitätsmoduliert ist.

5. Verfahren nach Anspruch 4, dadurch gekennzeichnet,
daß die zwei Teilstrahlen von zwei voneinander unabhängigen Laserquellen (1) erzeugt werden.

6. Verfahren nach Anspruch 4, dadurch gekennzeichnet,
daß die zwei Teilstrahlen je einen akustooptischen Modulator (4;5) durchlaufen.

7. Verfahren nach Anspruch 4, dadurch gekennzeichnet,
daß die zwei Teilstrahlen senkrecht zueinander polarisiert werden.

8. Verfahren nach Anspruch 4, dadurch gekennzeichnet,
daß die zwei Teilstrahlen von ein und derselben Laserquelle (1) mittels Strahlteilung erzeugt werden, wobei Vorkehrungen zur Beseitigung der Interferenzfähigkeit der Teilstrahlen vor der Zusammenfügung getroffen werden müssen.

9. Verfahren nach Anspruch 1, dadurch gekennzeichnet
daß die Differenzfrequenz der beiden Modulationsfrequenzen (f₁;f₂) registriert und deren Amplitude analysiert wird.

10. Verfahren nach Anspruch 1, dadurch gekennzeichnet,
daß die Summenfrequenz der beiden Modulationsfrequenzen (f₁;f₂) registriert und neben der Amplitude zusätzlich auf Phasenablage untersucht wird.

11. Verfahren nach Anspruch 1, dadurch gekennzeichnet,
daß ein Anteil des auf das Objekt (15) gerichteten Lichts zur Erzeugung eines Referenzwertes auf einen Referenzdetektor (11) ausgekoppelt und das Differenzsignal beider Detektoren (10,11) ausgewertet wird.

12. Verfahren nach Anspruch 1, dadurch gekennzeichnet,
daß der Laserstrahl aus zwei nichtinterferenzfähigen, mit jeweils einer der zwei Frequenzen (f₁;f₂) intensitätsmodulierten Teilstrahlen zusammengefügt wird und daß die Teilstrahlen vor ihrer Zusammenfügung senkrecht zueinander polarisiert und vor dem Meß- und dem Referenzdetektor (10,11) analysiert werden, so daß genau einer der beiden Teilstrahlen von jeweils einem der Detektoren (10,11) registriert wird.

13. Verfahren nach Anspruch 12, dadurch gekennzeichnet,
daß das Signal des jeweils zur Messung gelangenden Teilstrahls mittels des phasenempfindlichen Gleichrichters auf Amplitude und Phasenablage analysiert wird.

14. Anordnung zur Thermowellenanalyse, bei der ein Laserstrahl über ein Objektiv (14) auf ein zu untersuchendes Objekt (15) fokussiert ist, in dessen Strahlverlauf nach einer Wechselwirkung mit dem Objekt (15) optisch abbildende Elemente sowie ein Meßdetektor (10) zur Erfassung der durch die Objektreaktion auf die Energiedeponierung des Objekts (15) modulierten Intensität des Laserstrahls angeordnet sind, dadurch gekennzeichnet, daß
- der Laserstrahl in seinem Modulationsspektrum zwei diskrete Frequenzen (f₁;f₂) aufweist und
- dem Meßdetektor (10) eine frequenzselektive Einrichtung nachgeordnet ist, die ausschließlich auf die durch die besagte Objektreaktion erzeugte Mischfrequenz aus beiden Modulationsfrequenzen (f₁;f₂) eingestellt ist, so daß die Amplitude dieser Mischfrequenz ermittelbar ist.

15. Anordnung nach Anspruch 14, dadurch gekennzeichnet,
daß zur Erzeugung des Laserstrahls eine einzige Laserquelle (1), die in ihrem Modulationsspektrum zwei diskrete Modulationsfrequenzen (f₁;f₂) aufweist, vorhanden ist.

16. Anordnung nach Anspruch 15, dadurch gekennzeichnet,
daß die Laserquelle (1) eine Laserdiode (1') ist, der beide Modulationsfrequenzen (f₁;f₂) zugeführt werden.

17. Anordnung nach Anspruch 15, dadurch gekennzeichnet,
daß zur Beurteilung des vom Objekt (15) durchgelassenen Laserstrahls ein dem Objektiv (14) gleichwertiges optisches System (17) und der Meßdetektor (10) dem Objekt (15) auf derselben optischen Achse nachgeordnet sind.

18. Anordnung nach Anspruch 15, dadurch gekennzeichnet,
daß zur Beurteilung des vom Objekt (15) reflektierten Laserstrahles ein strahlauskoppelndes Element dem Objektiv (14) im Strahlengang des reflektierten Laserstrahls nachgeordnet ist.

19. Anordnung nach Anspruch 15, dadurch gekennzeichnet,
daß der frequenzselektiven Einrichtung ein Differenzverstärker (16) vorgeordnet ist, der an seinem invertierenden Eingang mit einem Referenzdetektor (11), dessen Eingangssignal aus dem unbeeinflußten Laserstrahl der Laserquelle (1) mittels eines halbdurchlässigen Spiegels (2) ausgekoppelt ist, in Verbindung steht.

20. Anordnung nach Anspruch 15, dadurch gekennzeichnet,
daß die Laserquelle (1) aus einem unmodulierten Laser und einem modulierenden optischen Element zusammengesetzt ist, dem die zwei Modulationsfrequenzen (f₁;f₂) zugeführt sind.

21. Anordnung nach Anspruch 20, dadurch gekennzeichnet,
daß das modulierende optische Element ein akustooptischer Modulator (4, 5) ist.

22. Anordnung nach Anspruch 14, dadurch gekennzeichnet,
daß zur Erzeugung des Laserstrahls
. eine unmodulierte Laserquelle (1),
. ein halbdurchlässiger Spiegel (2), der zwei gleichwertige Teilstrahlen erzeugt,
. Mittel zur Beseitigung der Interferenzfähigkeit der Teilstrahlen sowie ein Strahlteilerwürfel
. zur Zusammenfügung der beiden Teilstrahlen vor dem Objektiv (14) angeordnet ist und
. in jedem der Teilstrahlen ein optisches Element zur Intensitätsmodulation (4, 5) und Mittel zur Entkopplung von einfallendem und vom Objekt (15) beeinflußtem Laserstrahl angeordnet sind, wobei die Elemente zur Intensitätsmodulation (4, 5) jeweils eine der unterschiedlichen Modulationsfrequenzen (f₁ bzw. f₂) aufweisen.

23. Anordnung nach Anspruch 22, dadurch gekennzeichnet, daß
. beide Teilstrahlen nach der Aufspaltung gleichsinnig polarisiert sind,
. in den Teilstrahlengängen jeweils eine unter dem Brewsterwinkel positionierte Glasplatte (6 bzw. 7) so angeordnet ist, daß der jeweils reflektierte Strahlanteil der Glasplatten (6;7) entlang einer gemeinsamen Achse verläuft, wobei auf dieser Achse zwischen den Glasplatten (6;7) ein λ/₂-Plättchen (8) und im Richtungssinn der reflektierten Strahlanteile ein Referenzdetektor (11) außerhalb des Glasplattenabstandes angeordnet sind und
. ein λ/₂-Plättchen (9) in einem der Teilstrahlengänge zwischen Glasplatte (6 oder 7) und Strahlteilerwürfel (13) vorhanden ist.

24. Anordnung nach Anspruch 23, dadurch gekennzeichnet, daß
. der Meßdetektor (10) auf der besagten gemeinsamen Achse der Glasplatten (6;7) dem Referenzdetektor (11) bezüglich des Glasplattenzwischenraumes gegenüberliegend angeordnet ist und
. der Strahlteilerwürfel (13) für einen vom Objekt (15) in sich reflektierten Strahlanteil eine Polarisationsweiche darstellt.

25. Anordnung nach Anspruch 23, dadurch gekennzeichnet,
daß zur vollständigen Entkopplung des einfallenden und des am Objekt (15) reflektierten Strahls
. der einfallende Laserstrahl als achsparalleler Strahl zum Objektiv (14) orientiert ist, so daß der am Objekt (15) reflektierte Strahl bezüglich der Objektivachse zentralsymmetrisch verläuft, und
. im Strahlengang des achsparallel austretenden reflektierten Strahls der Meßdetektor (10) angeordnet ist.

26. Anordnung nach Anspruch 24 oder 25, dadurch gekennzeichnet,
daß unmittelbar vor dem Referenzdetektor (11) ein Element (12) mit steuerbarer Transmission angeordnet ist zum Abgleich des zeitlichen Mittelwertes der Differenz aus Meß- und Referenzdetektorsignal auf Null.

27. Anordnung nach Anspruch 14, dadurch gekennzeichnet,
daß zur Erzeugung des Laserstrahles
. zwei separate Laserquellen (1), die unterschiedlich mit jeweils einer der Modulationsfrequenzen (f₁;f₂) moduliert sind, vorhanden sind und
. ein Strahlteilerwürfel (13) zur Vereinigung der Strahlen der zwei Laserquellen (1) vor dem Objektiv (14) angeordnet ist.

28. Anordnung nach Anspruch 27, dadurch gekennzeichnet,
daß zwischen Strahlteilerwürfel (13) und Objektiv (14) ein halbdurchlässiger Spiegel (2) angeordnet ist, dessen reflektierter Strahlanteil auf einen Referenzdetektor (11) trifft, wobei der Referenzdetektor (11) und der Meßdetektor (10) mit den Eingängen eines vor der frequenzselektiven Einrichtung eingefügten Differenzverstärkers (16) verbunden sind.

29. Anordnung nach Anspruch 28, dadurch gekennzeichnet, daß
. die Strahlen der zwei Laserquellen (1) senkrecht zueinander polarisiert sind,
. der Strahlteilerwürfel (13) zugleich eine Polarisationsweiche darstellt und
. vor dem Meß- und Referenzdetektor (10;11) jeweils ein Polarisationsfilter (18,19) mit der gleichen Orientierung angeordnet ist.

## Claims

1. Method for thermowave analysis in which a laser beam is directed on an object to be examined (15), the modulated intensity of the beam being detected by a measuring detector (10) via a focusing objective (14) by means of the object reaction to the energy deposit of the object (15) characterized in that
- the intensity of the laser beam before it hits the object (15) is modulated in such a way that its modulation spectrum contains two discrete frequencies (f₁; f₂) and
- the optical response of the object (15) is measured at the output of the measuring detector (10) by means of a frequency-selective device as the amplitude of a mixed frequency of the two modulation frequencies (f₁; f₂) generated by the said object reaction.

2. Method according to claim 1, characterized in that the laser beam is generated by a laser diode (1'), to which both modulation frequencies (f₁; f₂) are supplied.

3. Method according to claim 1, characterized in that the laser beam in the beam path between the laser source (1) and the objective (14) passes an optical modulator to which both modulation frequencies (f₁; f₂) are supplied.

4. Method according to claim 1, characterized in that the laser beam is coupled from two partial beams incapable of interfering with each other, each of which is intensity modulated with one of the two frequencies (f₁; f₂).

5. Method according to claim 4, characterized in that the two partial beams are generated by two laser sources which are independent of each other.

6. Method according to claim 4, characterized in that the two partial beams each pass through an acousto-optical modulator (4; 5).

7. Method according to claim 4, characterized in that the two partial beams are polarized perpendicularly to each other.

8. Method according to claim 4, characterized in that the two partial beams are generated by one and the same laser source (1) by means of beam splitting, steps having to be taken to eliminate the interference capability of the partial beams before their being brought together.

9. Method according to claim 1, characterized in that the differential frequency of the two modulation frequencies (f₁; f₂) is registered and its amplitude analyzed.

10. Method according to claim 1, characterized in that the sum frequency of the two modulation frequencies (f₁; f₂) is registered, and, besides the amplitude, is examined additionally with respect to phase position.

11. Method according to claim 1, characterized in that a portion of the light directed on the object (15) is decoupled to generate a reference value on a reference detector (11) and the differential signal of both detectors (10, 11) is evaluated.

12. Method according to claim 1, characterized in that the laser beam is coupled from two partial beams, incapable of interference, and intensity modulated in each case with one of the two frequencies (f₁; f₂), and in that the partial beams are polarized perpendicularly to one another before being coupled and are analyzed before the measuring and reference detector (10, 11), so that exactly one of the two partial beams is registered by one of the detectors (10, 11) in each case.

13. Method according to claim 12, characterized in that the signal of the partial beam arriving to be measured in each case is analyzed by means of a phase-sensitive rectifier with respect to amplitude and phase position.

14. Arrangement for thermowave analysis in which a laser beam is focused through an objective (14) on an object (15) to be examined, optically focusing elements and a measuring detector (10) to measure the intensity of the laser beam modulated by the object reaction to the energy deposit of the object (15) being arranged in the beam path after an interaction with the object (15), characterized in that
- the laser beam has two discrete frequencies (f₁; f₂) in its modulation spectrum and
- a frequency-selective device is disposed after the measur-ing detector (10), which device is tuned exclusively to the mixed frequency of the two modulation frequencies (f₁; f₂) generated by the said object reaction so that the amplitude of this mixed frequency can be detected.

15. Arrangement according to claim 14, characterized in that a single laser source (1), which has two discrete modulation frequencies (f₁; f₂) in its modulation spectrum, is provided to generate the laser beam.

16. Arrangement according to claim 15, characterized in that the laser source (1) is a laser diode (1') to which both modulation frequencies (f₁; f₂) are supplied.

17. Arrangement according to claim 15, characterized in that to evaluate the laser beam which the object (15) has allowed to pass, an optical system (17) equivalent to the objective (14) and a measuring detector (10) are disposed after the object (15) on the same optical axis.

18. Arrangement according to claim 15, characterized in that to evaluate the laser beam reflected by the object (15) a beam de-coupling element is disposed after the objective (14) in the beam path of the reflected laser beam.

19. Arrangement according to claim 15, characterized in that disposed before the frequency-selective device is a differential amplifier (16), which is connected on its inverting input end with a reference detector (11), whose input signal is decoupled from the unaffected laser beam of the laser source (1) by means of a semi-permeable mirror (2).

20. Arrangement according to claim 15, characterized in that the laser source (1) is made up of an unmodulated laser and a modulating optical element to which the two modulation frequencies (f₁; f₂) are supplied.

21. Arrangement according to claim 20, characterized in that the modulating optical element is an acousto-optical modulator (4, 5).

22. Arrangement according to claim 14, characterized in that to generate the laser beam disposed are
an unmodulated laser source (1),
a semi-permeable mirror (2), which generates two equivalent partial beams,
means to eliminate the interference capability of the partial beams as well as a beam splitting cube for coupling of the two partial beams is disposed before the objective (14) and
in each of the partial beams an optical element for intensity modulation (4, 5) and means for decoupling of the incident laser beam and of the laser beam affected by the object (15), the elements for intensity modulation (4, 5) having in each case one of the different modulation frequencies (f₁ or f₂, respectively).

23. Arrangement according to claim 22, characterized in that
both partial beams are polarized unidirectionally after the splitting,
in the partial beam paths in each case a glass plate (6 or 7, respectively) positioned under the Brewster angle is disposed in such a way that the reflected portion of the beam of the glass plates (6; 7) in each case runs along a common axis, whereby disposed on this axis between the glass plates (6; 7) are a half-wave plate (8) and in the direction in which the reflected beam portions are directed a reference detector (11) outside the glass plate spacing and
a half-wave plate (9) is provided in one of the partial beam paths between glass plate (6 or 7) and beam splitting cube (13).

24. Arrangement according to claim 23, characterized in that,
the measuring detector (10) is disposed on the said common axis of the glass plates (6; 7) opposite the reference detector (11) with respect to the space between the glass plates and
the beam splitting cube (13) represents a polarization switch for a beam portion reflected by the object (15) in itself.

25. Arrangement according to claim 23, characterized in that for complete decoupling of the incident laser beam and of the laser beam reflected on the object (15)
the incident laser beam is oriented as the beam parallel to the objective (14) so that the beam reflected on the object (15) runs centrally symmetrically with respect to the objective axis, and
is disposed in the beam path of the axis-parallel, emitted, reflected beam of the measuring detector (10).

26. Arrangement according to claim 24 or 25, characterized in that disposed immediately before the reference detector (11) is an element (12) with controllable transmission to set to zero the temporal mean value of the difference from the measur-ing and reference detector signals.

27. Arrangement according to claim 14, characterized in that to generate the laser beam
two separate laser sources (1) are provided, which are modulated differently with in each case one of the modulation frequencies (f₁; f₂) and
a beam splitting cube (13) is disposed before the objective (14) to unite the beams of the two laser sources (1).

28. Arrangement according to claim 27, characterized in that disposed between beam splitting cube (13) and objective (14) is a semi-permeable mirror (2) whose reflected beam portion hits upon a reference detector (11), whereby the reference detector (11) and the measuring detector (10) are connected to the inputs of a differential amplifier (16) inserted before the frequency-selective device.

29. Arrangement according to claim 28, characterized in that
the beams of the two laser sources (1) are polarized perpen- . dicularly to one another,
the beam splitting cube (13) represents at the same time a polarization switch and
disposed before the measuring and reference detector (10; 11) in each case is a polarization filter (18; 19) with the same orientation.

## Revendications

1. Méthode d'analyse par ondes thermiques, dans laquelle un faisceau laser est dirigé sur un objet à examiner (15), l'intensité du faisceau modulée par la réaction de l'objet au dépôt d'énergie sur l'objet (15) étant mesurée par un détecteur de mesure (10) via un objectif de focalisation (14), caractérisée en ce que:
- l'intensité du faisceau laser avant son incidence sur l'objet est modulée de manière à ce que son spectre de modulation contienne deux fréquences discrètes (f1 ;f2), et
- la réponse optique de l'objet (15) est mesurée à la sortie du détecteur de mesure (10) au moyen d'un dispositif sélectif en fréquence comme amplitude d'une fréquence de battement des deux fréquences de modulation (f1;f2), provoquée par ladite réaction de l'objet.

2. Méthode selon la revendication 1, caractérisée en ce que le faisceau laser est généré par une diode laser (1') commandée par les deux fréquences de modulation (f1;f2).

3. Méthode selon la revendication 1, caractérisée en ce que le faisceau laser traverse entre la source laser (1) et l'objectif (14) un modulateur optique commandé par les deux fréquences de modulation (f1;f2).

4. Méthode selon la revendication 1, caractérisée en ce que le faisceau laser est formé de deux faisceaux partiels non susceptibles de créer des interférences mutuelles, chacun étant modulé en intensité avec l'une des deux fréquences (f1;f2).

5. Méthode selon la revendication 4, caractérisée en ce que les deux faisceaux partiels sont produits par deux sources laser (1) indépendantes l'une de l'autre.

6. Méthode selon la revendication 4, caractérisée en ce que les deux faisceaux partiels traversent chacun un modulateur acousto-optique (4;5).

7. Méthode selon la revendication 4, caractérisée en ce que les deux faisceaux partiels sont polarisés perpendiculairement l'un à l'autre.

8. Méthode selon la revendication 4, caractérisée en ce que les deux faisceaux partiels sont générés par une seule et même source laser (1) par partage de faisceau, des mesures devant être prises pour limiter la capacité d'interférence des faisceaux partiels avant leur combinaison.

9. Méthode selon la revendication 1, caractérisée en ce que la fréquence de différence des deux fréquences de modulation (f1;f2) est enregistrée et son amplitude analysée.

10. Méthode selon la revendication 1, caractérisée en ce que la fréquence de somme des deux fréquences de modulation (f1;f2) est enregistrée et en ce que, en plus de son amplitude, sa position de phase est examinée.

11. Méthode selon la revendication 1, caractérisée en ce qu'une partie de la lumière dirigée sur l'objet (15) est couplée à un détecteur de référence (11) pour générer une valeur de référence et en ce que le signal de différence des deux détecteurs (10,11) est évalué.

12. Méthode selon la revendication 1, caractérisée en ce que le faisceau laser est formé à partir de deux faisceaux partiels non susceptibles d'interférence et modulés en intensité chacun avec une des deux fréquences (f1;f2), et en ce que les faisceaux partiels sont polarisés perpendiculairement l'un à l'autre avant leur combinaison, et analysés avant le détecteur de mesure et de référence (10,11), en sorte qu'exactement un des deux faisceaux partiels soit enregistré par chacun des détecteurs (10,11).

13. Méthode selon la revendication 12, caractérisé en ce que l'amplitude et la position de phase de chaque signal de faisceau partiel destiné à la mesure sont analysées au moyen d'un redresseur sensible en phase.

14. Dispositif d'analyse par ondes thermiques, dans lequel un faisceau laser est focalisé par un objectif (14) sur un objet à examiner (15), des éléments de concentration optique ainsi qu'un détecteur de mesure (10), pour saisir l'intensité du faisceau laser modulée par la réaction de l'objet au dépôt d'énergie sur l'objet (15), étant placés dans le chemin optique du faisceau après interaction avec l'objet (15), caractérisé en ce que:
- le spectre de modulation du faisceau laser présente deux fréquences discrètes (f1;f2) et
- un dispositif sélectif en fréquence est placé après le détecteur de mesure (10), qui est réglé uniquement sur la fréquence de battement provoquée par ladite réaction de l'objet à partir des deux fréquences de modulation (f1;f2), en sorte que l'amplitude de cette fréquence de battement puisse être déterminée.

15. Dispositif selon la revendication 14, caractérisé en ce que une seule source laser (1), qui possède un spectre de modulation avec deux fréquences de modulation discrètes (f1;f2), est disponible pour générer le faisceau laser.

16. Dispositif selon la revendication 15, caractérisé en ce que la source laser (1) est une diode laser (1') commandée par les deux fréquences de modulation (f1;f2).

17. Dispositif selon la revendication 15, caractérisé en ce que, pour mesurer le faisceau laser traversé par l'objet (15), un système optique (17) de même valeur que l'objectif (14) ainsi que le détecteur de mesure (10) sont placés après l'objet (15) sur le même axe optique.

18. Dispositif selon la revendication 15, caractérisé en ce que, pour mesurer le faisceau laser réfléchi par l'objet (15), un élément de découplage de faisceau est placé après l'objectif (14) dans le chemin optique du faisceau laser réfléchi,.

19. Dispositif selon la revendication 15, caractérisé en ce que le dispositif sélectif en fréquence est placé avant un amplificateur différentiel (16) dont l'entrée inverseuse est reliée à un détecteur de référence (11) dont le signal d'entrée est couplé avec le faisceau laser non influencé de la source laser (1) au moyen d'un miroir semi-transparent (2).

20. Dispositif selon la revendication 15, caractérisé en ce que la source laser (1) est constituée par un laser non modulé et par un élément de modulation optique commandé par les deux fréquences de modulation (f1;f2).

21. Dispositif selon la revendication 20, caractérisé en ce que l'élément de modulation optique est un modulateur acousto-optique (4,5).

22. Dispositif selon la revendication 14, caractérisé en ce que pour générer le faisceau laser
une source laser non modulée (1),
un miroir semi-transparent (2) qui produit deux faisceaux partiels de même valeur,
des moyens pour limiter la capacité d'interférence des faisceaux partiels, ainsi que
un cube séparateur de faisceaux pour réunir les deux faisceaux partiels
sont placés avant l'objectif (14), et en ce que dans chacun des faisceaux partiels un élément optique de modulation d'intensité (4, 5) et des moyens de découplage du faisceau laser influencé par l'objet (15) et du faisceau laser incident, les éléments de modulation d'intensité (4, 5) présentant chacun une des deux fréquences de modulation différentes (f1, resp. f2).

23. Dispositif selon la revendication 22, caractérisé en ce que les deux faisceaux partiels sont polarisés dans le même sens après la séparation, une plaque de verre (6, resp. 7) positionnée sous l'angle d'incidence brewsterienne étant placée dans le chemin optique de chaque faisceau partiel en sorte que la part de faisceau réfléchie à chaque fois par les plaques de verre (6;7) soit dirigée selon un axe commun, une plaque de demi-longueur d'onde étant placée sur cet axe entre les plaques de verre (6;7) et un détecteur de référence (11) étant placé sur cet axe dans le sens de la part du faisceau réfléchi hors de l'espace entre les plaques de verre, une plaque de demi-longueur d'onde (9) étant prévue dans l'un des chemins optiques de faisceau partiel entre la plaque de verre (6 ou 7) et le cube séparateur de faisceau (13).

24. Dispositif selon la revendication 23, caractérisé en ce que le détecteur de mesure (10) est placé sur ledit axe commun des plaques de verre (6;7) vis-à-vis du détecteur de référence (11) par rapport à l'espace entre les plaques de verre, et en ce que le cube séparateur de faisceau (13) présente une polarisation pour une part de faisceau renvoyée par l'objet (15).

25. Dispositif selon la revendication 23, caractérisé en ce que pour compléter le découplage du faisceau incident et réfléchi par l'objet, le faisceau laser incident est orienté comme un faisceau parallèle à l'axe de l'objectif (14), en sorte que le faisceau réfléchi par l'objet soit positionné en symétrie centrale par rapport à l'axe de l'objectif, et en ce que le détecteur de mesure (10) est placé dans le chemin optique du faisceau réfléchi émergent parallèle à l'axe.

26. Dispositif selon l'une des revendications 24 ou 25, caractérisé en ce qu'un élément (12) de transmission contrôlable est placé juste avant le détecteur de référence (11) pour annuler la valeur moyenne temporelle de la différence des signaux du détecteur de mesure et de référence.

27. Dispositif selon la revendication 14, caractérisé en ce que pour générer le faisceau laser, deux sources laser (1) différentes sont prévues, chacune étant modulée avec une des différentes fréquences de modulation (f1;f2), et en ce qu'un cube séparateur de faisceau (13) est placé devant l'objectif (14) pour réunir les faisceaux des deux sources laser (1).

28. Dispositif selon la revendication 27, caractérisé en ce qu'un miroir semi-transparent (2) est placé entre le cube séparateur de faisceau (13) et l'objectif (14), la part de faisceau réfléchie par ledit miroir semi-transparent atteignant un détecteur de référence (11), le détecteur de référence (11) et le détecteur de mesure (10) étant reliés avec les entrées d'un amplificateur différentiel (16) introduit avant le dispositif sélectif en fréquence.

29. Dispositif selon la revendication 28, caractérisé en ce que les faisceaux des deux sources laser (1) sont polarisés perpendiculairement l'un à l'autre, le cube séparateur de faisceau (13) étant en outre placé de manière polarisée, et un filtre de polarisation (18,19) avec la même orientation étant placé à chaque fois avant les détecteurs de mesure et de référence (10;11).
